# EUROPÄISCHE PATENTSCHRIFT

(11) **EP 0 518 124 B1**
(45) Veröffentlichungstag und Bekanntmachung des Hinweises auf die Patenterteilung: **06.09.1995**
(21) Anmeldenummer: 92108899.3
(22) Anmeldetag: 27.05.1992
(51) Int. Cl.: G01F 1/84

(54) **Coriolis-Massendurchflussmessgerät**
Coriolis-mass flow meter
Débitmètre massique Coriolis

(30) Priorität: 09.06.1991 DE 4118877; 03.09.1991 DE 4129181
(43) Veröffentlichungstag der Anmeldung: 16.12.1992
(73) Patentinhaber: Krohne AG, 4019 Basel (CH)
(72) Erfinder: Kazakis, Ioannis, Dipl.-Ing., W-7500 Karlsruhe 21 (DE)
(74) Vertreter: Gesthuysen, Hans Dieter, Dipl.-Ing.

(56) Entgegenhaltungen:
- EP-A- 0 189 230
- EP-A- 0 212 782
- EP-A- 0 398 103
- EP-A- 0 473 919
- DE-A- 3 824 351

## Beschreibung

Die Erfindung betrifft ein Massendurchflußmeßgerät für strömende Medien, das nach dem Coriolis-Prinzip arbeitet, mit einem Meßgerätgehäuse, mit einem Leitungseinlauf, mit mindestens einer das strömende Medium führenden Coriolis-Leitung, mit einem Leitungsauslauf, mit mindestens einem auf die Coriolis-Leitung wirkenden Schwingungserzeuger, mit mindestens einem Coriolis-Kräfte und/oder auf Coriolis-Kräften beruhende Coriolis-Schwingungen erfassenden Schwingungsmeßwertaufnehmer und mit einem Tragsystem, wobei der Leitungseinlauf, die Coriolis-Leitung und der Leitungsauslauf an das Tragsystem angeschlossen sind.

Massendurchflußmeßgeräte für strömende Medien, die nach dem Coriolis-Prinzip arbeiten, sind in verschiedenen Ausführungen bekannt (vgl. z. B. die DE-OSen 26 29 833, 28 22 087, 28 33 037, 29 38 498, 30 07 361, 33 29 544, 34 43 234, 35 03 841, 35 05 166, 35 26 297, 37 07 777, 39 16 285 und 40 16 907, die EP-OSen 0 083 144, 0 109 218, 0 119 638,0 196 150, 0 210 308, 0 212 782, 0 235 274, 0 239 679, 0 243 468, 0 244 692, 0 271 605, 0 275 367 und 0 282 552 sowie die US-PSen 4,491,009, 4,628,744 und 4,666,421) und finden in zunehmendem Maße in der Praxis Verwendung.

Bei Massendurchflußmeßgeräten für strömende Medien, die nach dem Coriolis-Prinzip arbeiten, unterscheidet man grundsätzlich zwischen einerseits solchen, deren Coriolis-Leitung als gerades Rohr ausgeführt ist, und andererseits solchen, deren Coriolis-Leitung als - einfach oder mehrfach - gebogenes Rohr, auch als Rohrschleife, ausgeführt ist. Außerdem unterscheidet man bei den in Rede stehenden Massendurchflußmeßgeräten zwischen einerseits solchen, die nur eine Coriolis-Leitung aufweisen, und andererseits solchen, die zwei Coriolis-Leitungen aufweisen; bei den Ausführungen mit zwei Coriolis-Leitungen können diese strömungstechnisch in Reihe oder parallel zueinander liegen. Alle Ausführungsformen haben Vorteile und Nachteile.

Ausführungsformen von Massendurchflußmeßgeräten, bei denen die Coriolis-Leitung als gerades Rohr ausgeführt ist bzw. die Coriolis-Leitungen als gerade Rohre ausgeführt sind, sind in Bezug auf den mechanischen Aufbau einfach und folglich mit relativ geringen Kosten herzustellen; dabei sind auch die Rohrinnenflächen gut bearbeitbar, z. B. polierbar. Im übrigen haben sie einen geringen Druckverlust. Nachteilig ist dabei, daß sie bei einer bestimmten Baulänge eine relativ hohe Eigenfrequenz haben. Ausführungsformen von Massendurchflußmeßgeräten, bei denen die Coriolis-Leitung als gebogenes Rohr ausgeführt ist bzw. die Coriolis-Leitungen als gebogene Rohre ausgeführt sind, haben unter den Gesichtspunkten, unter denen Ausführungsformen mit einem geraden Rohr bzw. mit geraden Rohren Vorteile haben, Nachteile; vorteilhaft ist dabei jedoch, daß sie bei einer bestimmten Baulänge eine relativ niedrige Eigenfrequenz haben.

Massendurchflußmeßgeräte, die nach dem Coriolis-Prinzip arbeiten, stellen ein schwingendes bzw. schwingungsfähiges System dar. Dabei sind von Bedeutung einerseits die Leitungs-Eigenfrequenz und andererseits die hier so bezeichnete Coriolis-Eigenfrequenz. Üblicherweise arbeitet der Schwingungserzeuger mit der Leitungs-Eigenfrequenz; die Coriolis-Leitung wird also vom Schwingungserzeuger mit einer Schwingungsfrequenz angeregt, die der Leitungs-Eigenfrequenz entspricht. Die Coriolis-Eigenfrequenz soll die durch die Coriolis-Kraft bevorzugt angeregte Schwingungsfrequenz sein. Die Tatsache, daß Massendurchflußmeßgeräte, die nach dem Coriolis-Prinzip arbeiten, ein schwingendes bzw. schwingungsfähiges System darstellen, führt dazu, daß einerseits die Schwingungen auf die Leitung übertragen werden, in die das Massendurchflußmeßgerät eingefügt ist, daß andererseits Schwingungen der Leitung, in die das Massendurchflußmeßgerät eingefügt ist, auf das Massendurchflußmeßgerät übertragen werden und das Meßergebnis verfälschen; das eine wie das andere ist natürlich nicht gewollt.

Bei dem bekannten Massendurchflußmeßgerät, von dem die Erfindung ausgeht (vgl. EP - A - 0 398 103) ist ein Tragsystem für die Coriolis-Leitung vorgesehen, welches starr mit einem die wesentlichen Teile des Tragsystems und die Coriolis-Leitung umschließenden Schwingungsmeßgerätgehäuse verbunden ist (vgl. auch EP - A - 0 212 782). Bei diesem bekannten Massendurchflußmeßgerät ist beispielsweise problematisch, daß Störschwingungen der äußeren Rohrleitungen mit einer Frequenz, die der Eigenfrequenz des Meßgerätgehäuses entspricht, ungehindert die Coriolis-Leitung erfassen und somit Störungen verursachen.

Bei einem weiteren bekannten Massendurchflußmeßgerät (vgl. DE - A - 38 24 351) münden jeweils die freien Enden der Coriolis-Leitung in ein Anschlußrohr, an das jeweils eine Rohrleitung als Zuleitungs- bzw. Ableitungsrohr anschließbar ist, außerdem ist ein die Coriolis-Leitung wenigstens teilweise umschließendes Meßgerätgehäuse schwingungssteif ausgebildet wobei die beiden Anschlußrohre mit diesem Meßgerätgehäuse starr verbunden sind.

Weiter ist ein Massendurchflußmeßgerät für Schiffstreibstoff bekannt (vgl. EP - A - 0 189 230). Bei diesem Massendurchflußmeßgerät ist eine Meßeinheit in einem Gehäuse über Störfrequenzen eliminierende Federelemente befestigt, wobei die Anschlußleitungen für die Meßeinheit als flexible Schläuche ausgebildet sind.

Der Erfindung liegt nun die Aufgabe zugrunde, ein nach dem Coriolis-Prinzip arbeitendes Massendurchflußmeßgerät anzugeben, das weitgehend "schwingungsautark" ist; "schwingungsautark" meint dabei, daß einerseits die meßgeräteigenen Schwingungen praktisch nicht auf die Leitung übertragen werden, in die das Massendurchflußmeßgerät eingefügt ist, daß andererseits Schwingungen der Leitung, in die das Massendurchflußmeßgerät eingefügt ist, praktisch nicht auf das eigentliche Meßsystem des Massendurchflußmeßgerätes übertragen werden.

Das erfindungsgemäße Massendurchflußmeßgerät, bei dem die zuvor hergeleitete und dargelegte Aufgabe gelöst ist, besteht aus einem Gerät gemäß dem ersten Absatz der Beschreibung, das dadurch gekennzeichnet ist, daß die Baueinheit aus dem Leistungseinlauf, dem Tragsystem und dem Leitungsauslauf in dem Meßgerätgehäuse gelagert ist und daß die Tragsystem-Eigenfrequenz wesentlich größer ist als die Leitungs- und Coriolis-Eigenfrequenz der Coriolis-Leitung sowie die Meßgerät-Eigenfrequenz, wobei die Meßgerät-Eigenfrequenz der Eigenfrequenz der im Meßgerätgehäuse gelagerten Baueinheit, bestehend aus dem Leitungseinlauf, dem Tragsystem und dem Leitungsauslauf, entspricht.

Erfindungsgemäß sind also gleichsam "eigenfrequenzbedingte Entkopplungen" verwirklicht. Das erfindungsgemäß vorgesehene Tragsystem, das schwingungstechnisch zwischen dem eigentlichen Meßsystem und den äußeren Anschlüssen des erfindungsgemäßen Massendurchflußmeßgerätes vorgesehen ist, ist eigenfrequenzbedingt entkoppelt einerseits von dem eigentlichen Meßsystem dadurch, daß die Tragsystem-Eigenfrequenz wesentlich größer ist als die Leitungs-Eigenfrequenz und die Coriolis-Eigenfrequenz, andererseits von den äußeren Anschlüssen des erfindungsgemäßen Massendurchflußmeßgerätes dadurch, daß die Meßgerät-Eigenfrequenz insgesamt wesentlich kleiner ist als die Tragsystem-Eigenfrequenz.

Im einzelnen gibt es nun verschiedene Möglichkeiten, das erfindungsgemäße Massendurchflußmeßgerät auszugestalten und weiterzubilden, was im folgenden nur beispielhaft erläutert werden soll.

Zur Lehre der Erfindung gehört, daß die Tragsystem-Eigenfrequenz wesentlich größer ist als die Leitungs-Eigenfrequenz und die Coriolis-Eigenfrequenz und daß die Meßgerät-Eigenfrequenz wesentlich kleiner ist als die Tragsystem-Eigenfrequenz. Realisieren läßt sich dabei ohne weiteres, daß die Tragsystem-Eigenfrequenz um ein Vielfaches größer ist als die Leitungs-Eigenfrequenz und die Coriolis-Eigenfrequenz und daß die Meßgerät-Eigenfrequenz um ein Vielfaches kleiner ist als die TragsystemEigenfrequenz.

Bei Massendurchflußmeßgeräten der in Rede stehenden Art liegt die Leitungs-Eigenfrequenz und die Coriolis-Eigenfrequenz in der Regel bei ca. 100 bis 150 Hz, vorzugsweise bei 120 bis 140 Hz. Dann empfiehlt es sich, die Tragsystem-Eigenfrequenz bei ca. 2000 Hz und die Meßgerät-Eigenfrequenz bei ca. 20 Hz zu fixieren. Dabei ist dann die Meßgerät-Eigenfrequenz nicht nur wesentlich kleiner als die Tragsystem-Eigenfrequenz, sondern auch um ein Vielfaches kleiner als die Leitungs-Eigenfrequenz und die Coriolis-Eigenfrequenz.

Die für das erfindungsgemäße Massendurchflußmeßgerät wesentlichen Fixierungen der Tragsystem-Eigenfrequenz und der Meßgerät-Eigenfrequenz lassen sich durch Variation von Längen, Wandstärken und Material ohne weiteres erreichen. Die niedrige Meßgerät-Eigenfrequenz gewinnt man vorzugsweise dadurch, daß der Leitungseinlauf und der Leitungsauslauf als gerades Rohr mit relativ dünner Wandstärke oder als gebogenes Rohr ausgeführt sind.

Das erfindungsgemäße Massendurchflußmeßgerät weist gegenüber dem Massendurchflußmeßgerät, von dem die Erfindung ausgeht, als zusätzliches Bauteil das Tragsystem auf. Dieses Tragsystem führt nun zu einer statischen Belastung des Leitungseinlaufs und des Leitungsauslaufs. Um nun diese Belastung zu reduzieren bzw. zu eliminieren, geht eine weitere Lehre der Erfindung dahin, das Tragsystem an am Meßgerätgehäuse befestigten Tragfedern aufzuhängen und/oder auf am Meßgerätgehäuse sich abstützenden Stützfedern abzustützen. Dabei sind die Tragfedern und/oder die Stützfedern so zu bemessen, daß die Meßgerät-Eigenfrequenz = Eigenfrequenz des Systems Leitungseinlauf - Tragsystem - Tragfedern und/oder Stützfedern - Leitungsauslauf wesentlich kleiner ist als die Leitungs-Eigenfrequenz und die Coriolis-Eigenfrequenz, vorzugsweise die Meßgerät-Eigenfrequenz um mindestens den Faktor drei kleiner ist als die Leitungs-Eigenfrequenz und die Coriolis-Eigenfrequenz.

Im folgenden wird die Erfindung anhand einer lediglich Ausführungsbeispiele darstellenden Zeichnung nochmals erläutert; es zeigt
- Fig. 1: schematisch den Aufbau einer ersten Ausführungsform eines erfindungsgemäßen Massendurchflußmeßgerätes,
- Fig. 2: wiederum schematisch den Aufbau einer zweiten Ausführungsform eines erfindungsgemäßen Massendurchflußmeßgerätes, und zwar eine Seitenansicht, und
- Fig. 3: eine Draufsicht auf das in Fig. 2 dargestellte Massendurchflußmeßgerät.

Die in den Figuren nur schematisch dargestellten Massendurchflußmeßgeräte für strömende Medien arbeiten nach dem Coriolis-Prinzip und bestehen in ihrem grundsätzlichen Aufbau aus einem Leitungseinlauf 1, einer das strömende Medium führenden Coriolis-Leitung 2, einem Leitungsauslauf 3, mindestens einem auf die Coriolis-Leitung 2 einwirkenden, nicht dargestellten Schwingungserzeuger und mindestens einem Coriolis-Kräfte und/oder auf Coriolis-Kräften beruhende Coriolis-Schwingungen erfassenden, nicht dargestellten Schwingungsmeßwertaufnehmer.

Erfindungsgemäß ist ein Tragsystem 4 mit einer Tragsystem-Eigenfrequenz, die wesentlich größer ist als die Leitungs-Eigenfrequenz und die Coriolis-Eigenfrequenz, vorgesehen, ist die Coriolis-Leitung 2 an das Tragsystem 4 angeschlossen, sind der Leitungseinlauf 1 und der Leitungsauslauf 3 an das Tragsystem 4 angeschlossen und ist die Meßgerät-Eigenfrequenz wesentlich kleiner als die Tragsystem-Eigenfrequenz.

Für die in den Figuren nur schematisch dargestellten erfindungsgemäßen Massendurchflußmeßgeräte gilt vorzugsweise eine Leitungs-Eigenfrequenz und Coriolis-Eigenfrequenz von 120 bis 140 Hz, eine Tragsystem-Eigenfrequenz von ca. 2000 Hz und eine Meßgerät-Eigenfrequenz von ca. 20 Hz. Die geringe Meßgerät-Eigenfrequenz - von ca. 20 Hz - ist dadurch realisiert, daß der Leitungseinlauf 1 und der Leitungsauslauf 3 jeweils als gerades Rohr mit relativ dünner Wandstärke ausgeführt sind.

Im übrigen zeigen die Figuren, daß die hier schematisch dargestellten erfindungsgemäßen Massendurchflußmeßgeräte noch ein Meßgerätgehäuse 5 aufweisen. In dem Meßgerätgehäuse 5 ist die Baueinheit aus Leitungseinlauf 1, Tragsystem 4 und Leitungsauslauf 3, für die die Meßgerät-Eigenfrequenz von ca. 20 Hz gilt, gelagert.

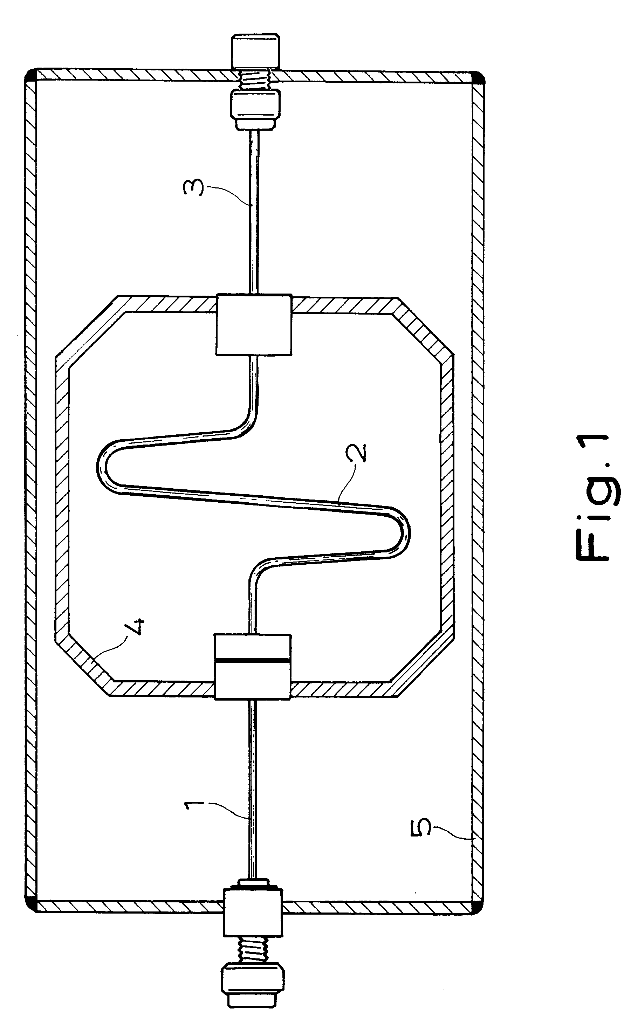

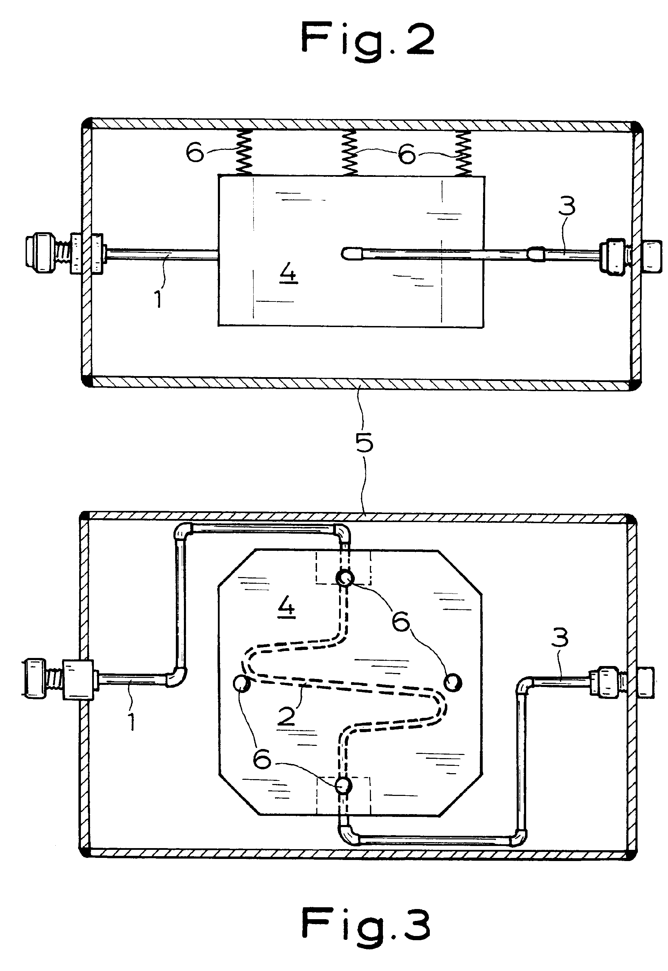

Die in den Fig. 2 und 3 dargestellte Ausführungsform eines erfindungsgemäßen Massendurchflußmeßgerätes unterscheidet sich von der in Fig. 1 dargestellten Ausführungsform dadurch, daß das Tragsystem 4 an dem Meßgerätgehäuse 5 befestigten Tragfedern 6 aufgehangen ist. Dadurch ist die Belastung des Leitungseinlaufs 1 und des Leitungsauslaufs 3 durch das Tragsystem 4 weitgehend eliminiert, zumindest aber stark reduziert.

## Patentansprüche

1. Massendurchflußmeßgerät für strömende Medien, das nach dem Coriolis-Prinzip arbeitet, mit einem Meßgerätgehäuse (5), mit einem Leitungseinlauf (1), mit mindestens einer das strömende Medium führenden Coriolis-Leitung (2), mit einem Leitungsauslauf (3), mit mindestens einem auf die Coriolis-Leitung (2) wirkenden Schwingungserzeuger, mit mindestens einem Coriolis-Kräfte und/oder auf Coriolis-Kräften beruhende Coriolis-Schwingungen erfassenden Schwingungsmeßwertaufnehmer, und mit einem Tragsystem (4), wobei der Leitungseinlauf (1), die Coriolis-Leitung (2) und der Leitungsauslauf (3) an das Tragsystem (4) angeschlossen sind, **dadurch gekennzeichnet**, daß die Baueinheit aus dem Leitungseinlauf (1), dem Tragsystem (4) und dem Leitungsauslauf (3) in dem Meßgerätgehäuse (5) gelagert ist und daß die Tragsystem-Eigenfrequenz wesentlich größer ist als die Leitungs- und Coriolis-Eigenfrequenz der Coriolis-Leitung (2) sowie die Meßgerät-Eigenfrequenz, wobei die Meßgerät-Eigenfrequenz der Eigenfrequenz der im Meßgerätgehäuse (5) gelagerten Baueinheit, bestehend aus dem Leitungseinlauf (1), dem Tragsystem (4) und dem Leitungsauslauf (3), entspricht.

2. Massendurchflußmeßgerät nach Anspruch 1, dadurch gekennzeichnet, daß die Tragsystem-Eigenfrequenz um ein Vielfaches größer ist als die Leitungs-Eigenfrequenz und die Coriolis-Eigenfrequenz.

3. Massendurchflußmeßgerät nach Anspruch 1 oder 2, dadurch gekennzeichnet, daß die Meßgerät-Eigenfrequenz um ein Vielfaches kleiner ist als die Tragsystem-Eigenfrequenz.

4. Massendurchflußmeßgerät nach Anspruch 2 oder 3, wobei die Leitungs-Eigenfrequenz und die Coriolis-Eigenfrequenz bei ca. 100 bis 150 Hz, vorzugsweise bei 120 bis 140 Hz liegt, dadurch gekennzeichnet, daß die Tragsystem-Eigenfrequenz bei ca. 2000 Hz liegt.

5. Massendurchflußmeßgerät nach einem der Ansprüche 2 bis 4, wobei die Leitungs Eigenfrequenz und die Coriolis-Eigenfrequenz bei ca. 100 bis 150 Hz, vorzugsweise bei 120 bis 140 Hz liegt, dadurch gekennzeichnet, daß die Meßgerät-Eigenfrequenz bei ca. 20 Hz liegt.

6. Massendurchflußmeßgerät nach einem der Ansprüche 1 bis 5, dadurch gekennzeichnet, daß der Leitungseinlauf (1) und der Leitungsauslauf (3) als gerades Rohr mit relativ dünner Wandstärke ausgeführt sind.

7. Massendurchflußmeßgerät nach einem der Ansprüche 1 bis 5, dadurch gekennzeichnet, daß der Leitungseinlauf und der Leitungsauslauf als gebogenes Rohr ausgeführt sind.

8. Massendurchflußmeßgerät nach einem der Ansprüche 1 bis 7, dadurch gekennzeichnet, daß das Tragsystem (4) an am Meßgerätgehäuse (5) befestigten Tragfedern (6) aufgehangen ist.

9. Meßgerät nach einem der Ansprüche 1 bis 8, dadurch gekennzeichnet, daß das Tragsystem (4) auf am Meßgerätgehäuse sich abstützenden Stützfedern abgestützt ist.

## Claims

1. A mass flow measuring device for flowing media which operates according to the Coriolis principle, with a measuring device housing (5), with a line inlet (1), with at least one Coriolis line (2) conveying the flowing medium, with a line outlet (3), with at least one vibration generator acting on the Coriolis line (2), with at least one vibration reading recorder recording Coriolis forces and/or Coriolis vibrations based on Coriolis forces, and with a support system (4), wherein the line inlet (1), the Coriolis line (2) and the line outlet (3) are attached to the support system (4), characterised in that the constructional unit comprising the line inlet (1), the support system (4) and the line outlet (3) is mounted in the measuring device housing (5) and that the resonant frequency of the support system is significantly higher than the line resonant frequency and the Coriolis resonant frequency of the Coriolis line (2) and is significantly higher than the measuring device resonant frequency, wherein the measuring device resonant frequency corresponds to the resonant frequency of the constructional unit mounted in the measuring device housing (5) and consisting of the line inlet (1), the support system (4) and the line outlet (3).

2. A mass flow measuring device according to claim 1, characterised in that the support system resonant frequency is many times higher than the line resonant frequency and the Coriolis resonant frequency.

3. A mass flow measuring device according to claim 1 or 2, characterised in that the measuring device resonant frequency is many times lower than the support system resonant frequency.

4. A mass flow measuring device according to claim 2 or 3, wherein the line resonant frequency and the Coriolis resonant frequency are about 100 to 150 Hz, preferably 120 to 140 Hz, characterised in that the support system resonant frequency is about 2000 Hz.

5. A mass flow measuring device according to any one of claims 2 to 4, wherein the line resonant frequency and the Coriolis resonant frequency are about 100 to 150 Hz, preferably 120 to 140 Hz, characterised in that the measuring device resonant frequency is about 20 Hz.

6. A mass flow measuring device according to any one of claims 1 to 5, characterised in that the line inlet (1) and the line outlet (3) are constructed as straight tubes with a relatively thin wall thickness.

7. A mass flow measuring device according to any one of claims 1 to 5, characterised in that the line inlet and the line outlet are constructed as bent tubes.

8. A mass flow measuring device according to any one of claims 1 to 7, characterised in that the support system (4) is suspended on suspension springs (6) attached to the measuring device housing (5).

9. A measuring device according to any one of claims 1 to 8, characterised in that the support system (4) is supported on support springs supported on the measuring device housing.

## Revendications

1. Appareil de mesure du débit massique ou débitmètre massique pour des milieux qui s'écoulent, travaillant conformément au principe de Coriolis, comprenant un logement (5) pour l'appareil de mesure, une entrée de conduit (1), au moins un conduit de Coriolis (2) guidant le milieu qui s'écoule, une sortie de conduit (3), au moins un générateur d'oscillations agissant sur le conduit de Coriolis (2), un récepteur de la mesure de l'oscillation enregistrant les forces de Coriolis et/ou des oscillations de Coriolis s'appuyant sur des forces de Coriolis, ainsi qu'un système de support (4), dans lequel l'entrée de conduit (1), le conduit de Coriolis (2) et la sortie de conduit (3) sont raccordés au système de support (4), caractérisé en ce que l'unité de montage constituée par l'entrée de conduit (1), le système de support (4) et la sortie de conduit (3) est montée dans le logement (5) pour l'appareil de mesure et en ce que la fréquence propre du système de support est essentiellement supérieure à la fréquence propre du conduit et de Coriolis du conduit de Coriolis (2), et également à la fréquence propre de l'appareil de mesure, dans lequel la fréquence propre de l'appareil de mesure correspond à la fréquence propre de l'unité de construction montée dans le logement (5) pour l'appareil de mesure, constituée par l'entrée de conduit (1), le système de support (4) et la sortie de conduit (3).

2. Débitmètre massique selon la revendication 1, caractérisé en ce que la fréquence propre du système de support est supérieure d'un multiple à la fréquence propre du conduit et à la fréquence propre de Coriolis.

3. Débitmètre massique selon la revendication 1 ou 2, caractérisé en ce que la fréquence propre de l'appareil de mesure est inférieure d'un multiple à la fréquence propre du système de support.

4. Débitmètre massique selon la revendication 2 ou 3, dans lequel la fréquence propre du conduit et la fréquence propre de Coriolis se situent à une valeur d'environ 100 à 150 Hz, de préférence à une valeur de 120 à 140 Hz, caractérisé en ce que la fréquence propre du système de support se situe à environ 2000 Hz.

5. Débitmètre massique selon l'une quelconque des revendications 2 à 4, dans lequel la fréquence propre du conduit et la fréquence propre de Coriolis se situent à une valeur d'environ 100 à 150 Hz, de préférence à une valeur de 120 à 140 Hz, caractérisé en ce que la fréquence propre de l'appareil de mesure se situe à environ 20 Hz.

6. Débitmètre massique selon l'une quelconque des revendications 1 à 5, caractérisé en ce que l'entrée de conduit (1) et la sortie de conduit (3) sont réalisées en forme de tuyau rectiligne dont l'épaisseur de paroi est relativement mince.

7. Débitmètre massique selon l'une quelconque des revendications 1 à 5, caractérisé en ce que l'entrée de conduit et la sortie de conduit sont réalisées en forme de tube cintré.

8. Débitmètre massique selon l'une quelconque des revendications 1 à 7, caractérisé en ce que le système de support (4) est suspendu à des ressorts de support fixés au logement (5) pour l'appareil de mesure.

9. Appareil de mesure selon l'une quelconque des revendications 1 à 8, caractérisé en ce que le système de support (4) s'appuie sur des ressorts de support qui s'appuient sur le logement pour l'appareil de mesure.
